# EUROPEAN PATENT SPECIFICATION

(11) **EP 2 609 982 B1**
(45) Date of publication and mention of the grant of the patent: **16.03.2016**
(21) Application number: 12194744.4
(22) Date of filing: 29.11.2012
(51) Int. Cl.: B01D 53/06, B01D 53/26, F24F 3/14, F28D 19/04

(54) **Adsorption rotor**
Adsorptionsrotor
Rotor d'adsorption

(30) Priority: 27.12.2011 JP 2011284932
(43) Date of publication of application: 03.07.2013
(73) Proprietor: Seibu Giken Co., Ltd., Koga-shi, Fukuoka 811-3134 (JP)
(72) Inventor: Fujioka, Yuji, Koga-shi, Fukuoka 811-3134 (JP)
(74) Representative: TBK

(56) References cited:
- EP-A1- 1 145 755
- WO-A1-03/043719
- JP-A- 2003 126 641
- JP-A- 2004 025 132
- US-A- 5 169 414
- US-A- 5 702 508

## Description

### [Technical field]

This invention is concerned with an adsorption rotor according to the preamble of claim 1 whose surface layers only need to be replaced, when performance of an adsorption rotor deteriorates, or when an adsorption rotor surface layer is got clogged.

### [Background of the art]

An adsorption rotor functions as either an absorber of volatile organic compounds (hereafter called "VOC") which are then released to make them denser, or as a dehumidifier by adsorbing moisture in air, using hydrophobic zeolite, activated carbon, hydrophilic zeolite, or silica gel.

For the case of an adsorption rotor which functions as an adsorption-concentrator of VOC, such materials as an activated carbon or a hydrophobic zeolite are used as adsorbents. Among these, a rotor using hydrophobic zeolite is nonflammable, and therefore has the advantage of avoiding in resulting into serious accident even if VOC adsorbed by the rotor may catch fire.

Moreover, both a hydrophilic zeolite and a hydrophobic zeolite have the heat resistance of more than 300 °C, and adsorbed VOC can be desorbed nearly completely by passing desorption air with a high temperature of not less than 300 °C, when VOC having a high boiling point are adsorbed by a certain cause.

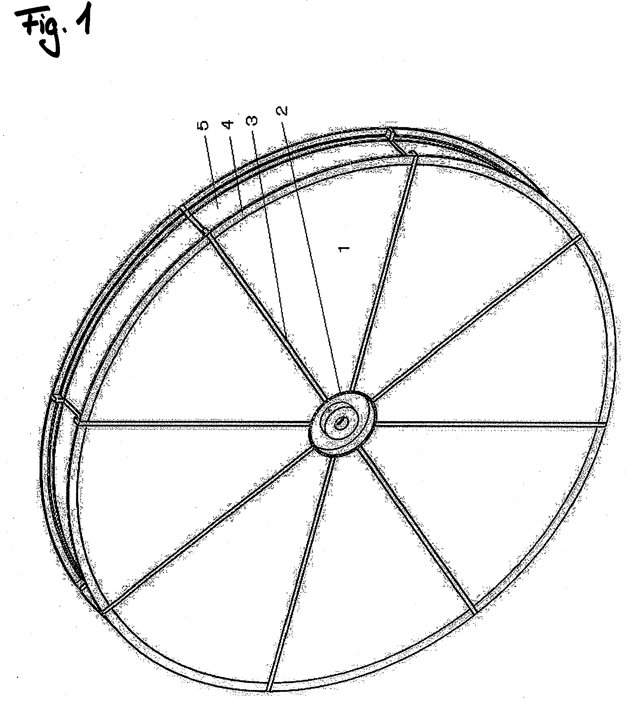

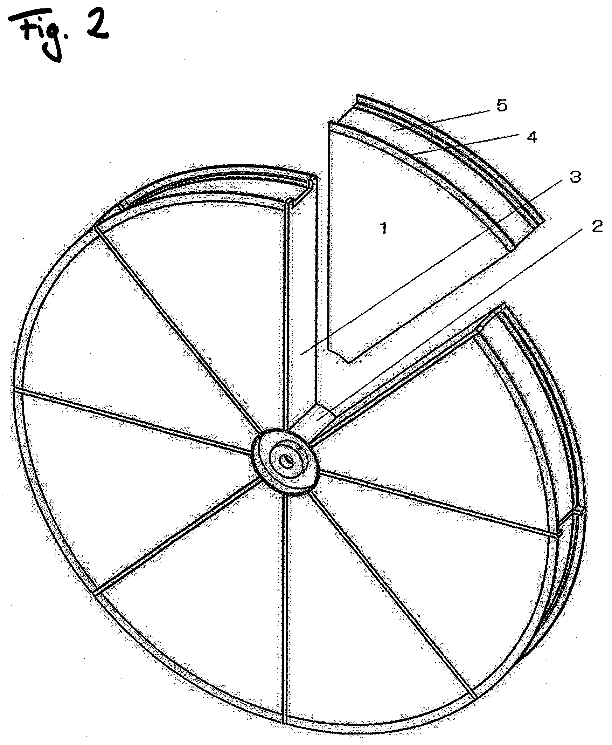

The adsorption rotors used for the adsorption removal of VOC or for dehumidifier are manufactured as shown in Fig. 1 by considering the fabrication cost, where the whole unit is made up from the separate parts of metal aggregate boss 2, the reinforcement griddle 3, the perimeter angle 4, and the perimeter griddle 5. On the other hand, a large-sized rotor has a diameter of more than 4 m. In order to facilitate easy handling in case of transporting the rotor to the installation spot, it is divided into two or more sector pieces as shown in Fig. 2, which is then assembled at the spot. The technology about such a divided-type adsorption rotor was disclosed in JP-A-2004-025132. In particular, JP-A-2004-025132 shows a generic adsorption rotor according to the preamble of claim 1. In addition, the technology about the divided-type adsorption rotor equipped with two or more adsorption blocks having the capability of suppressing the crack formation in the rotor was disclosed in JP-A-2003-126641.

The exchange to a new adsorption rotor is required, when the rotor element deteriorates or performance of the above-mentioned adsorption rotor becomes lower, due to clogging on the rotor surface by dust accumulation due to operation for a long time, or paint mists being transformed to the liquid phase from the gaseous phase due to a temperature fall. The initial manufacturing cost of an integral-type rotor is comparatively cheap. However, when there is no exchange space, a rotor will have to be decomposed compulsively, and it will have to be exchanged to a new rotor, resulting in the excessive time and effort of exchange and thus the increase in the cost of exchange. On the other hand, the initial cost of the divided-type rotor is comparatively high. However, it can be easily exchanged to a new sector piece by removing the bolts etc. which are fixing the sector piece, resulting in the decrease of the cost of exchange. In addition, the technology of equipping a fixed-type dust-collector was disclosed in JP-A-2006-090572, which aims to prevent contamination of such a rotor, etc.

As mentioned above, in the case of the integral-type adsorption rotor shown in Fig. 1, there occurs much futility of material because rotor elements other than the deteriorated surface will also be changed. Moreover, since the weight of the portion of the rotor to be exchanged becomes heavy, requiring a heavy industrial equipment etc. during the exchange and thus increasing a replacement cost. For the case of the divided-type adsorption rotor as shown in Fig. 2, it is necessary to strengthen every sector piece to be exchanged, in order to make metal aggregate strong enough as compared with an integral-type, resulting in the increase in an initial cost. In addition, whole rotor elements other than the deteriorated surface side have to be exchanged, resulting in much futility of material, similarly as for the case of the integral-type adsorption rotor.

For the case as disclosed in JP-A-2006-090572, there is no capability of adsorption/desorption at the portion of a fixed-type dust-collecting filter, resulting in an easier formation of clogs than a portion of a honeycomb adsorption element, and the width of the rotor becomes wider than that for a rotor without the filter having the same performance. In other words, in the case of a honeycomb-like adsorption element, after VOC adheres to the surface, it is desorbed by desorption air. When VOC adheres to the portion of the fixed mount type dust-collecting filter as disclosed in JP-A-2006-090572, it is not desorbed by desorption air, resulting in an easy formation of clogs there.

### [The outline of the present invention]

It is an object of the present invention to further develop an adsorption rotor according to the preamble of claim 1 such that only deteriorated portions can be detached and then be replaced by new portions without greatly increasing an initial cost and attachment-and-detachment cost, when degradation and/or performance decrement, etc. of an adsorption rotor element occur.

The object of the present invention is achieved by an adsorption rotor having the features of claim 1. A further advantageous development of the present invention are defined in the dependent claim.

It is an advantage of the present invention to provide the ability of replacement of only the deteriorated surface side of an adsorption rotor, when degradation and/or performance decrement, etc. of an adsorption rotor element occur.

The adsorption rotor of the present invention has enabled the attachment- and-detachment of an adsorption rotor surface side to be made only by changing the structure of metal aggregates. In addition, the present invention has an advantage that it can be introduced also into an already existing adsorption rotor, because there is no necessity in changes of an outer diameter etc.

By dividing an adsorption rotor into a width direction and piling the divided portions up, the honeycombs of the two adsorption rotor elements shift and a turbulent flow occurs in the flow of a wind inside the honeycombs. Due to this effect, a wind hits uniformly over the honeycombs, where adsorbents are attached, resulting in the improvement in performance, compared with the integral-type and divided-type adsorption rotor where a flow is laminar.

Moreover, since the portion to be replaced is only a surface side, its weight is light. Thus, because the portion to be replaced can be fixed using bolts, thus making special tools for this replacement procedures unnecessary, unskilled personnels can easily perform this work. By these means and arrangements, the exchange time can be reduced to about 1/3 and the exchange cost is accordingly reduced, as compared with the adsorption rotor of an integral-type or a divided-type. Moreover, in case of generating dry air for the dehumidifying purpose or of desorbing VOC for a painting plant, for example, if the quantity of air to be processed is at a level which does not affect a human body, the attachment-and-detachment procedures may be carried out during the system in operation.

### [Brief description of the drawings]

[Figure 1] Figure 1 shows an oblique view of the conventional integral-type adsorption rotor.
[Figure 2] Figure 2 shows an oblique view of the conventional divided-type adsorption rotor.
[Figure 3] Figure 3 shows an oblique view of the first embodiment of the present invention of the integral-type partially divided-type adsorption rotor. (The first embodiment.)
[Figure 4] Figure 4 shows a graph illustrating a comparison of the toluene extraction ratio for the conventional adsorption rotor and for the integral-type partially divided-type adsorption rotor of the present invention.
[Figure 5] Figure 5 shows the flows of air in the honeycombs (a) in the conventional adsorption rotor and (b) in the integral-type partially divided-type adsorption rotor of the present invention.
[Figure 6] Figure 6 is an enlargement of the attachment-and-detachment portion of the adsorption rotor for the case of integral-type partially divided-type adsorption rotor of the present invention. (The first embodiment.)
[Figure 7] Figure 7 is an oblique view of the perimeter portion of the integral-type partially divided-type adsorption rotor of the second embodiment of the present invention. (The second embodiment.)
[Figure 8] Figure 8 shows the perimeter portion of the integral-type partially divided-type adsorption rotor of the present invention. (The second embodiment.)
[Figure 9] Figure 9 shows the perimeter portion of the integral-type partially divided-type adsorption rotor of the present invention. (The second embodiment)

### [The embodiments the present invention]

By the present invention, the detachment and replacement of only the surface side of an adsorption rotor can be easily carried out without increasing an initial cost and the attachment-and-detachment cost, when degradation and/or performance decrement, etc. of a rotor element occur.

### (The first embodiment of the present invention)

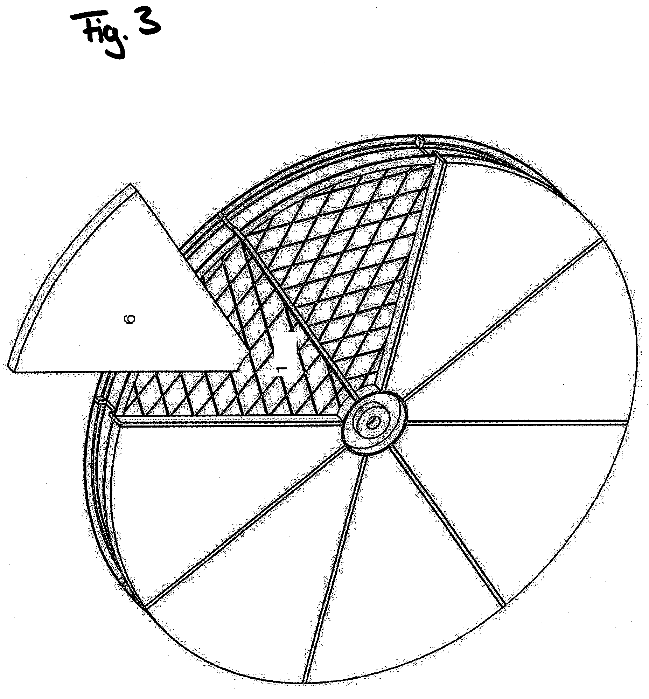

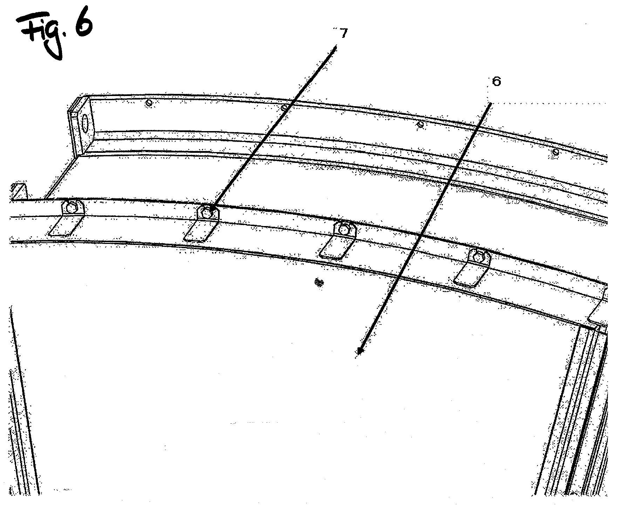

The conventional integral-type adsorption rotor has a shape as shown in Fig. 1, where fan-shaped honeycombs 1 are fixed to the rotor integrally using the boss 2, the reinforcement griddle 3, the perimeter angle 4, and the perimeter griddle 5, all made of metal aggregates. The first embodiment of the present invention has shapes of either Fig. 3 or Fig. 6 and is of a type of the integral-type partially divided-type adsorption rotor. Here, the attachment-and-detachment adsorption rotor element 6 is placed on the upper part of the integral-type adsorption rotor element 1 to protect it in the direction of the rotor width by being fixed using bolts at the perimeter griddle fixing bracket 7, which is made possible by extending the metal aggregates. Because the weight of the attachment-and-detachment adsorption rotor element 6 is light, thus enabling bolt-fixing to be made, unskilled personnels can easily carry out the detachment-and-attachment procedures without using special tools for the work. Moreover, it is also possible to detach and replace the adsorbing rotor element 6 from the rotor shaft side, thus enabling the procedures to be carried out from inside the rotor chamber. Thus, if the air condition is such that personnels might enter the chamber wearing a protective garment, the procedures could be carried out while the rotor is in operation without using heavy industrial equipments, thus enabling substantial reduction of the replacement procedures to be made.

### (The second embodiment of the present invention)

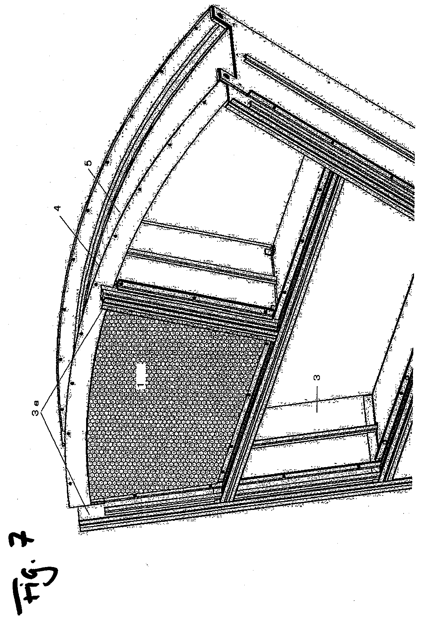

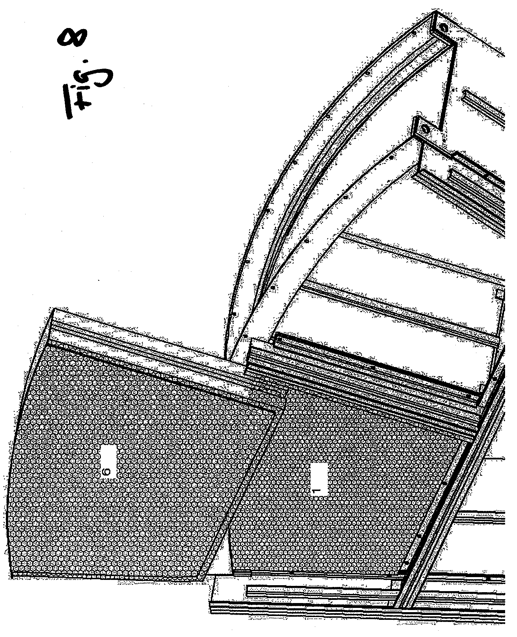

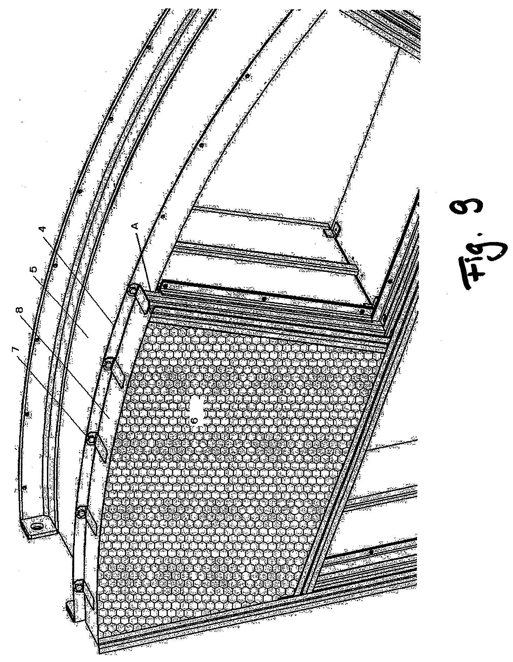

The second embodiment of the present invention is described using Figs. 7, 8, and 9. In case the diameter of the rotor exceeds 4 m, the weight of the attachment-and-detachment adsorption rotor element 6 becomes heavy. In this case, it is advisable to divide the diameter of an adsorption rotor during the production process. For this case, the metal aggregate 3a in Fig. 7, which protects the upper part of the integral-type adsorption rotor element 1, is put on the width direction of the rotor element so that the attachment-and-detachment adsorption rotor element 6 may pile up. Then, as shown in Fig. 8, the attachment-and-detachment adsorption rotor element 6 is inserted into the metal aggregate 3a. Thereafter, as shown in Fig. 9, the attachment-and-detachment adsorption rotor element 6 is held down by the perimeter griddle 8 from the adsorption rotor perimeter side, and is fixed using the perimeter griddle fixing elements 7 with bolts. Similarly as for the first embodiment of the present invention, a strong structure at the side of the perimeter of the attachment-and-detachment adsorption rotor element 6 or use of a large quantity of caulking, etc. become unnecessary, because leaks of processing air or reproduction air sre suppressed by the overlapping portion A of the perimeter angle 4 with the attachment-and-detachment adsorption rotor element 6.

With regard to the direction of piling up an attachment-and-detachment adsorption rotor element, when clogs at the side of an adsorption rotor processing entrance are anticipated due to paint mists etc. it is put on the processing entrance side for exchange, while when degradation at the reprocessing side of an adsorption rotor is anticipated due to heating polymerization, it is put on the reprocessing side for exchange there. It is possible to reuse the detached portion of the attachment-and-detachment rotor by carrying out calcination procedures. In this case, it is advisable to make the width to be 100 mm or less because, because if it is too wide, the calcination temperature will go up too much and will be damaged by fire at the time of calcination.

When concerns exist of polymerization of high boiling point substances adhering to the attachment-and-detachment rotor element, a catalyst element may be used. There is a concern of a surface of the rotor element catching fire if too much catalyst exists there. However, by reducing the amount of catalyst by making the width of the attachment-and-detachment rotor element thin as in the present invention, the danger of catching fire can be much reduced. Moreover, even when the composition of VOC to be processed changes somewhat, it is possible to change a hydrophobic zeolite used for an attachment-and-detachment adsorption rotor element into a different hydrophobic zeolite which may suit for the new composition.

It has already known that the length of a run-up section Xe, which is the distance from the leading edge of the honeycombs to the point where laminar flow of air changes to turbulent is described by the following equation 1 using the Reynolds number Re for the equivalent diameter d of the honeycombs. For example, if the wind velocity is 2 m/s with the height of 1.8 mm and pitch of 3.4 mm of the honeycomb, respectively, the length of the run-up section Xe becomes 15.97 mm. When the flow of the wind in the honeycombs is turbulent, the probability that dusts contained in a wind, paint mist, etc. may adhere to the honeycomb surface becomes high. Therefore, the width of an attachment-and-detachment adsorption rotor element is made to more than the above-mentioned length of the run-up section and below half of the rotor width.

### [Equation 1]

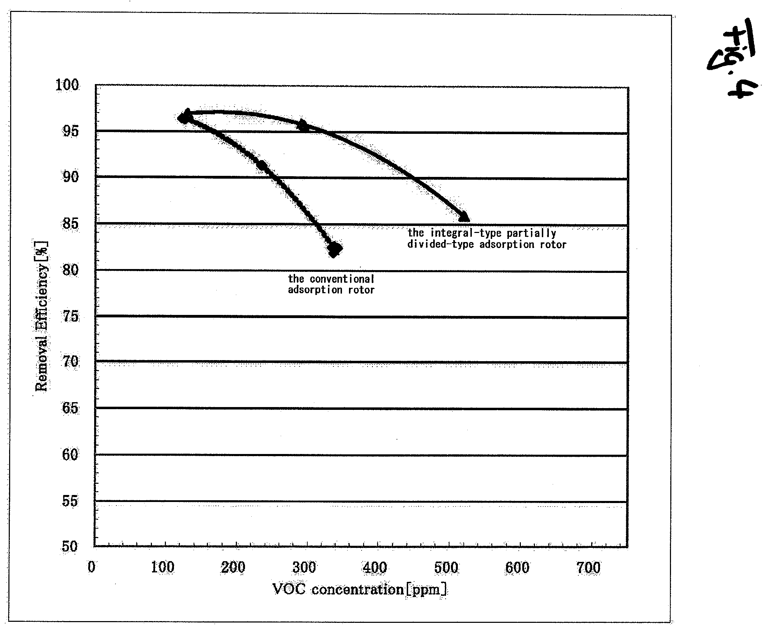

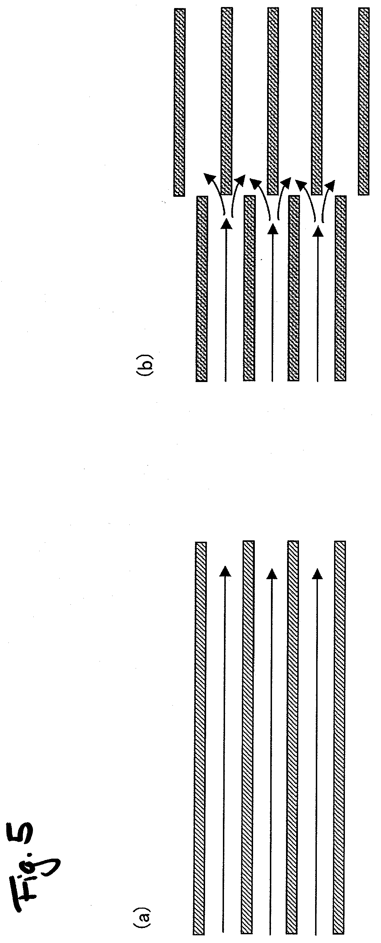

Figure 4 shows a graph of the performance data which describes toluene concentrations on the abscissa (the horizontal axis) against the toluene extraction ratio on the ordinate (the vertical axis) for the conventional integral type or divided-type VOC adsorption rotor, and the integral-type partially divided-type VOC adsorption rotor by the present invention. It is evident that the toluene removal performance of the adsorption rotor by the present invention is better than the conventional adsorption rotor. This result is explained by the fact that, as shown in Fig. 5, (a) the flow of air in adsorption rotor honeycombs in the conventional integral-type or divided-type VOC adsorption rotor is laminar, while (b) in the case of the present invention where honeycombs are divided in the width direction, a gap arises in the honeycombs, resulting in the turbulent flow, and the air being processed uniformly hitting the downstream honeycombs where adsorbents are supported, and the latter led to the improvement in performance. This effect can be brought about by making the honeycomb size of the attachment-and-detachment adsorption rotor element 6 smaller than the integral-type adsorption rotor element 1.

### [Industrial applicability]

The present invention offers an adsorption rotor where only the surface side of an adsorption rotor can be detached and replaced, even if degradation and/or performance decrement, etc. of the adsorption rotor element occur. By this procedure, performance can be restored to an almost new state.

### [Description of reference numbers]

1: Adsorption rotor element
2: Boss
3: Reinforcement griddle
4: Perimeter angle
5: Perimeter griddle
6: Attachment-and-detachment adsorption rotor element
7: Perimeter griddle fixing bracket
8: Perimeter griddle for attachment-and-detachment elements

[Objective] When performance of an adsorption rotor falls, or even if an adsorption rotor surface layer gets clogged, the present invention provides an adsorption rotor which can be detached and replaced only of its surface layer.
[The means of solution] The metal aggregate is extended in the width direction of the rotor element so that the metal aggregate can fix the attachment-and-detachment adsorption rotor elements 6 by piling them up using bolts with the perimeter griddle fixing bracket 7, thus resulting in protecting the upper part of the integral-type adsorption rotor element. In this way, the weight of the attachment-and-detachment adsorption rotor elements 6 can be made light, resulting in them being fixable only using bolts, and thus of no necessity of using a special tool for the work, enabling unskilled personnels to easily carry out the detachment-and-replacement procedures. Moreover, because the detachment-and-replacement procedures can be performed from a rotor spindle side, thus from inside of a chamber, there is no necessity of using a heavy industrial machine etc., resulting in much reduction in the cost for the procedures.

## Claims

1. An adsorption rotor comprising honeycomb-shaped adsorption elements (1, 6), the honeycomb-shaped adsorption elements (1, 6) being installed in a metal aggregate (3, 3a, 4-8) which is combined with a boss (2),
**characterized in that**
the adsorption rotor comprises at least two layers of honeycomb-shaped adsorption elements (1, 6), the thickness of one honeycomb-shaped adsorption element layer (6), which is located at a surface side of the adsorption rotor, being smaller than the thickness of the other honeycomb-shaped adsorption element layer (1) and **in that** said thinner honeycomb-shaped adsorption element (6) is divided into two or more fan-shaped sectors which are detachably and replaceably installed to the metal aggregate.

2. The adsorption rotor described in claim 1, wherein the fan-shaped sectors are insertable into the metal aggregate (3, 3a, 4-8) in the direction of a circumference of the adsorption rotor.

## Patentansprüche

1. Adsorptionsrotor mit wabenförmigen Adsorptionselementen (1, 6), wobei die wabenförmigen Adsorptionselemente (1, 6) in einem Metallaggregat (3, 3a, 4 - 8) installiert sind, das mit einer Nabe (2) kombiniert ist,
**dadurch gekennzeichnet, dass**
der Adsorptionsrotor zumindest zwei Schichten der wabenförmigen Adsorptionselemente (1, 6) aufweist, wobei die Dicke einer wabenförmigen Adsorptionselementeschicht (6), die an einer Oberflächenseite des Adsorptionsrotors angeordnet ist, kleiner ist als die Dicke der anderen wabenförmigen Adsorptionselementeschicht (1), und dass das dünnere wabenförmige Adsorptionselement (6) in zwei oder mehr fächerförmige Sektoren aufgeteilt ist, die an dem Metallaggregat abnehmbar und austauschbar installiert sind.

2. Adsorptionsrotor nach Anspruch 1, wobei die fächerförmigen Sektoren in das Metallaggregat (3, 3a, 4 - 8) in der Richtung eines Umfangs des Adsorptionsrotors einsetzbar sind.

## Revendications

1. Rotor d'adsorption comprenant des éléments d' adsorption en forme de nid d' abeille (1, 6), les éléments d'adsorption en forme de nid d'abeille (1, 6) étant installés dans un agrégat métallique (3, 3a, 4-8) qui est combiné avec un bossage (2),
**caractérisé en ce que**
le rotor d'adsorption comprend au moins deux couches d'éléments d'adsorption en forme de nid d'abeille (1, 6), l'épaisseur d'une couche d'éléments d'adsorption en forme de nid d'abeille (6), qui est localisée à un côté d'une surface du rotor d' adsorption, étant plus petite que l'épaisseur de l'autre couche d'éléments d'adsorption en forme de nid d' abeille (1) et **en ce que** ladite couche plus mince d'éléments d'adsorption en forme de nid d'abeille (6) est divisée en deux ou plusieurs secteurs en forme d'éventail qui sont installés de manière amovible et remplaçable à l'agrégat métallique.

2. Rotor d'adsorption décrit dans la revendication 1, dans lequel les secteurs en forme d'éventail sont insérables à l'intérieur de l'agrégat métallique (3, 3a, 4-8) dans la direction d'une circonférence du rotor d'adsorption.
